Europäisches Patentamt

European Patent Office

Office européen des brevets

(11) Numéro de publication: **0 318 364**
A1

(12) **DEMANDE DE BREVET EUROPEEN**

(21) Numéro de dépôt: **88402912.5**

(22) Date de dépôt: **21.11.88**

(51) Int. Cl.⁴: **E 05 G 1/00**
B 60 R 5/00, B 60 P 3/03

(30) Priorité: **24.11.87 EP 87402650**

(43) Date de publication de la demande:
**31.05.89 Bulletin 89/22**

(84) Etats contractants désignés:
**AT BE CH DE ES FR GB IT LI LU NL SE**

(71) Demandeur: **Huguenin, Gaston**
**Boulevard du Grand Marché**
**F-21800 Quetigny (FR)**

(72) Inventeur: **Huguenin, Gaston**
**Boulevard du Grand Marché**
**F-21800 Quetigny (FR)**

(74) Mandataire: **Hoisnard, Jean-Claude et al**
**Cabinet Beau de Lomenie 55, rue d'Amsterdam**
**F-75008 Paris (FR)**

(54) **Ensemble de coffre-fort.**

(57) L'invention est relative à un ensemble d'un coffre-fort de forme extérieure généralement parallélépipédique définie par une largeur (L), une hauteur (H) et une profondeur (P), l'une des dimensions - hauteur et largeur - étant inférieure à la profondeur (P), cet ensemble étant monté sur une structure de fixation.

Le coffre-fort (108) est monté sur la structure (102) au moyen d'un axe de pivotement (111) qui est orthogonal à celle (L) des deux dimensions qui est inférieure à la profondeur (P), et qui est inaccessible depuis l'extérieur du coffre-fort, de manière que, par rapport à la structure, ce coffre-fort (108) soit susceptible d'occuper une première position dans laquelle la profondeur (P) étant non parallèle à un plan de référence (101), la gêne provoquée par l'encombrement du coffre-fort est importante, et, une deuxième position dans laquelle la profondeur (P) s'étend parallèlement au plan (101), la gêne provoquée par l'encombrement du coffre-fort étant réduite.

Une application est la mise en place d'un coffre-fort dans le compartiment à bagages d'un véhicule de tourisme.

Fig 1

**Description**

Nombre d'automobilistes, ayant laissé des objets ou des papiers précieux dans leurs véhicules, ont eu le désagrément de constater la disparition de ces objets ou papiers à la suite d'un vol dans le véhicule en stationnement. Le remède pourrait consister, apparemment, à ne rien laisser dans le véhicule, ce qui n'est pas toujours très facile à réaliser pendant un voyage.

L'invention entend remédier à cet état de fait, en prévoyant d'embarquer dans le véhicule un coffre-fort. Il faut, bien entendu, éviter que ce coffre-fort puisse être détaché de la structure de véhicule de manière aisée et contre la volonté de son propriétaire.

La destination de la majorité des véhicules n'est en outre pas de transporter un coffre-fort et il est donc important d'avoir la possibilité de déplacer le coffre-fort à l'intérieur de l'enceinte dans laquelle il est disposé, en conservant son inviolabilité, de manière à rendre la présence du coffre-fort la moins gênante possible vis-à-vis de l'utilisation normale du véhicule. Ainsi, dans le cas où le coffre-fort serait contenu à l'intérieur du compartiment à bagages d'un véhicule de tourisme, il faut s'efforcer, tout en laissant le coffre-fort attaché à la structure de ce véhicule, de lui permettre d'occuper plusieurs emplacements non gênants vis-à-vis du chargement des bagages.

GB-A-2 105 399 représente l'installation d'un coffre-fort dans un véhicule, installation classique, le coffre-fort étant fixé définitivement en une seule position à l'intérieur du véhicule.

US-A-4 457 240 décrit une boîte résistante transportable par son propriétaire, mais, apparemment, ne pouvant être fixée sur la structure d'un véhicule qu'en un seul emplacement. La aussi, le problème de la gêne que peut provoquer la présence d'un tel objet dans une enceinte initialement destinée à un autre usage n'a pas été vu, et aucune solution n'a été proposée pour le minimiser. De plus, la forme même de la boîte représentée ne la rend pas particulièrement pratique au transport en sécurité d'objets précieux tels que, par exemple, de petites valises ou des serviettes porte- documents susceptibles de contenir des objets ou des documents précieux.

A partir de ces constatations, l'invention est parvenue à définir le concept d'un ensemble de coffre-fort utilisable dans les véhicules, destiné à être placé dans le compartiment à bagages, ou ailleurs, suivant sa taille, mais utilisable aussi dans les habitations non mobiles, ainsi que dans des engins mobiles, autres que des véhicules automobiles, tels que des engins de travaux publics, des avions ou des bateaux de faible tonnage.

L'invention a donc pour objet un ensemble d'un coffre-fort de forme extérieure généralement parallélépipédique définie par une largeur, une hauteur et une profondeur, l'une des dimensions - hauteur et largeur - étant notablement inférieure à la profondeur, cet ensemble étant monté sur une structure de fixation.

Selon l'invention, le coffre-fort est monté sur la structure au moyen d'au moins un premier axe de pivotement orienté en permanence selon une direction sensiblement parallèle à une face du coffre-fort délimitée par lesdites hauteur et largeur et sensiblement orthogonale à celle de ces deux dimensions qui est notablement inférieure à la profondeur, ledit premier axe de pivotement étant en outre inaccessible depuis l'environnement extérieur du coffre-fort, de manière que, par rapport à ladite structure, ce coffre-fort soit susceptible d'occuper une première position dans laquelle la profondeur étant non parallèle à un premier plan de référence (étant perpendiculaire ou oblique par rapport audit premier plan de référence), la gêne provoquée par l'encombrement du coffre-fort est importante, et, une deuxième position, qui se déduit de ladite première position par pivotement du coffre-fort autour du premier axe de pivotement et dans laquelle la profondeur s'étend parallèlement audit premier plan de référence, la gêne provoquée par l'encombrement du coffre-fort étant alors considérablement réduite par rapport à celle précitée correspondant à la première position du coffre-fort.

Les avantageuses dispositions suivantes sont, en outre, de préférence adoptées :

- selon une première variante de réalisation, un deuxième axe de pivotement sensiblement orthogonal audit premier axe de pivotement et inaccessible depuis l'environnement extérieur du coffre-fort réalise le montage à pivotement du coffre-fort par rapport à un support qui, lui, est monté pivotant par rapport à la structure autour dudit premier axe de pivotement, de manière que, par rapport à ladite structure, le coffre-fort soit susceptible d'occuper une troisième position qui se déduit de la deuxième position au moins par un pivotement du coffre-fort autour du deuxième axe de pivotement et dans laquelle, d'une part, la profondeur s'étend parallèlement à un deuxième plan de référence, d'autre part, la gêne provoquée par l'encombrement du coffre-fort est considérablement réduite par rapport à celle correspondant à ladite première position du coffre-fort ;

- selon une deuxième variante de réalisation, le premier axe de pivotement est monté sur un support qui est lui-même monté pivotant par rapport à la structure autour d'un deuxième axe de pivotement sensiblement orthogonal audit premier axe de pivotement et inaccessible depuis l'environnement extérieur du coffre-fort, de manière que, par rapport à ladite structure, le coffre-fort soit susceptible d'occuper une troisième position qui se déduit de la deuxième position au moins par un pivotement du coffre-fort autour du deuxième axe de pivotement et dans laquelle, d'une part, la profondeur s'étend parallèlement à un deuxième plan de référence, d'autre part, la gêne provoquée par l'encombrement du coffre-fort est considérablement réduite par rapport à celle correspondant à ladite première position du coffre-fort ;

- dans ces réalisations, l'ensemble comprend avantageusement un dispositif de maintien sélectif du coffre-fort dans sa deuxième position ;

- l'ensemble comporte une tige présentant deux extrémités, une première desdites extrémités étant rendue solidaire de la structure et la deuxième extrémité étant filetée, cependant que ledit support comporte, d'une part, un alésage taraudé qui coopère avec ladite deuxième extrémité filetée de la tige pour le montage à pivotement dudit support, d'autre part, un trou taraudé d'axe orthogonal à celui dudit alésage, une vis, comportant une tête de vis et une partie filetée, ayant sa partie filetée traversant un trou, dont est munie l'une des parois du coffre-fort, la tête de vis étant disposée à l'intérieur du coffre-fort et la partie filetée de la vis coopérant avec le trou taraudé pour le montage à pivotement du coffre-fort par rapport au support ;

- la première extrémité de la tige est solidaire d'une plaque munie d'au moins un ergot d'arrêtoir, cependant que la structure comporte un trou traversant susceptible d'être traversé par ladite tige et au moins un logement susceptible de recevoir ledit ergot d'arrêtoir la tige tranversant le trou, l'ergot étant reçu dans le logement, et un écrou coopérant avec le filetage de la deuxième extrémité de la tige à la fixation de ladite tige sur la structure jusqu'à application de ladite plaque sur une face délimitant la structure ;

- la première extrémité de la tige est solidaire d'une première face d'une première plaque ; cependant qu'au moins deux premiers crochets recourbés sont solidaires de ladite première plaque en étant fixés sur une deuxième face de cette première plaque opposée à ladite première face et comportent, chacun, une extrémité libre orientée vers, et écartée du plan de la deuxième face de la première plaque ; que la structure comporte une première face orientée en sens opposé à celui d'érection de la tige filetée par rapport à ladite structure, une deuxième face opposée à ladite première face de la structure, et des premiers trous de passage desdits premiers crochets ; qu'une deuxième plaque comporte, d'une part, au moins un deuxième crochet recourbé qui en est solidaire et qui est fixé sur une face de cette deuxième plaque, chaque deuxième crochet comportant une extrémité libre orientée vers, et écartée du plan de ladite face de la deuxième plaque, d'autre part, une échancrure de passage de ladite tige ; que la structure comporte en outre au moins un deuxième trou de passage du ou des deuxième(s) crochet(s) ; et, que le montage desdits première et deuxième plaques sur la structure est tel que les premiers crochets traversent les premiers trous jusqu'à ce que, d'une part, la deuxième face de la première plaque soit en appui sur la deuxième face de la structure, d'autre part, les extrémités libres des premiers crochets soient situées à proximité ou au contact de la première face de la structure ; le ou les deuxième(s) crochet(s) traversent les deuxièmes trous correspondants jusqu'à ce que, d'une part, la face de la deuxième plaque soit en appui sur la première face de la première plaque, d'autre part, l'extrémité libre de chaque deuxième crochet soit située à proximité ou au contact de la première face de la structure ; ladite tige a traversé l'échancrure de la deuxième plaque ; et, un écrou, coopérant avec l'extrémité filetée de la tige, maintient les première et deuxième plaques en appui mutuel et assemblées, interdisant de ce fait la sortie des premiers et deuxièmes crochets hors de leurs trous respectifs ;

- le support comporte un évidement dans lequel l'écrou est susceptible d'être contenu ;

- une languette est montée pivotante sur le support, cependant qu'une butée de limitation de son débattement est solidaire dudit support, l'ensemble constituant un dispositif de maintien sélectif du coffre-fort dans sa deuxième position.

Enfin, selon une autre variante de réalisation, la structure comporte une paroi délimitée par une face supérieure et par une face inférieure accessible à un monteur de coffre-fort, le dispositif de montage du coffre-fort étant constitué par :

- deux tiges, qui traversent ladite paroi, en étant placées de part et d'autre du coffre-fort et s'étendant sensiblement perpendiculairement à la paroi, chacune de ces tiges ayant une première extrémité constituant le support d'une plaque d'appui et ayant la deuxième extrémité minie d'un filetage ;

- deux écrous, qui coopèrent avec lesdits filetages de manière à mettre en apppui lesdites plaques d'appui sur une face de la paroi et ainsi à fixer lesdites tiges à la paroi, et

- deux vis, qui coopèrent chacune avec un trou taraudé ménagé dans chaque écrou, sensiblement orthogonalement par rapport à l'axe de la tige correspondante, qui traversent chacune un trou ménagé dans deux parois opposées du coffre-fort et dont les têtes (de vis) sont contenues à l'intérieur du coffre-fort et ne sont accessibles que par l'intérieur de ce coffre-fort.

Dans cette dernière réalisation, l'une au moins des tiges a son extrémité supérieure qui s'étend vers le haut au-delà de l'écrou correspondant, cependant que le dispositif de maintien sélectif du coffre-fort dans sa deuxième position est fixé sur l'extrémité supérieure de ladite tige et est constitué par au moins un loquet, qui est monté basculant sur un support vissé et immobilisé sur l'extrémité supérieure de ladite tige et sur lequel la face du coffre-fort, par laquelle celui-ci repose sur l'assise lorsqu'il est placé dans sa première position, est susceptible d'être en butée afin de limiter le pivotement du coffre-fort lorsque celui-ci est alors placé dans sa deuxième position.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :

- la figure 1 est une vue en perspective d'une première réalisation conforme à l'invention ;

- la figure 2 est une vue en élévation d;un élément constitutif de l'ensemble de la figure 1 ;

la figure 3 est une coupe suivant III-III de la figure 2 ;

- la figure 4 est une coupe suivant IV-IV de la figure 3 ;

- les figures 5A et 5B sont des vues, respectivement de dessus et de face, d'une première position occupée par le coffre-fort de la figure 1;

- les figures 6A et 6B sont des vues, respectivement de dessus et de face, d'une deuxième position occupée par le coffre-fort de la figure 1 ;

- les figures 7A et 7B sont des vues, respectivement de dessus et de face, d'une troisième position occupée par le coffre-fort de la figure 1 :

- les figures 8A et 8B sont des vues, respectivement de dessus et de face, d'une deuxième variante de réalisation disposée dans une première position d'utilisation ;

- les figures 9A et 9B sont des vues, respectivement de dessus et de face, d'une deuxième position occupée par le coffrefort des figures 8A et 8B ;

- les figures 10A et 10B sont des vues, respectivement de dessus et de face, d'une troisième position occupée par le coffre-fort des figures 8A et 8B ;

- les figures 11A et 11B sont des vues, respectivement de dessus et de face, d'une autre troisième position occupée par le coffre-fort des figures 8A et 8B ;

- la figure 12 représente, en une vue perspective, une variante de réalisation de l'élément illustré par les figures 2 à 4 ;

- les figures 13 et 14 sont deux coupes montrant deux phases successives du montage de l'élément de la figure 12 ;

- la figure 15 est une vue perspective d'une troisième variante de réalisation d'un ensemble de coffre-fort conforme à l'invention ;

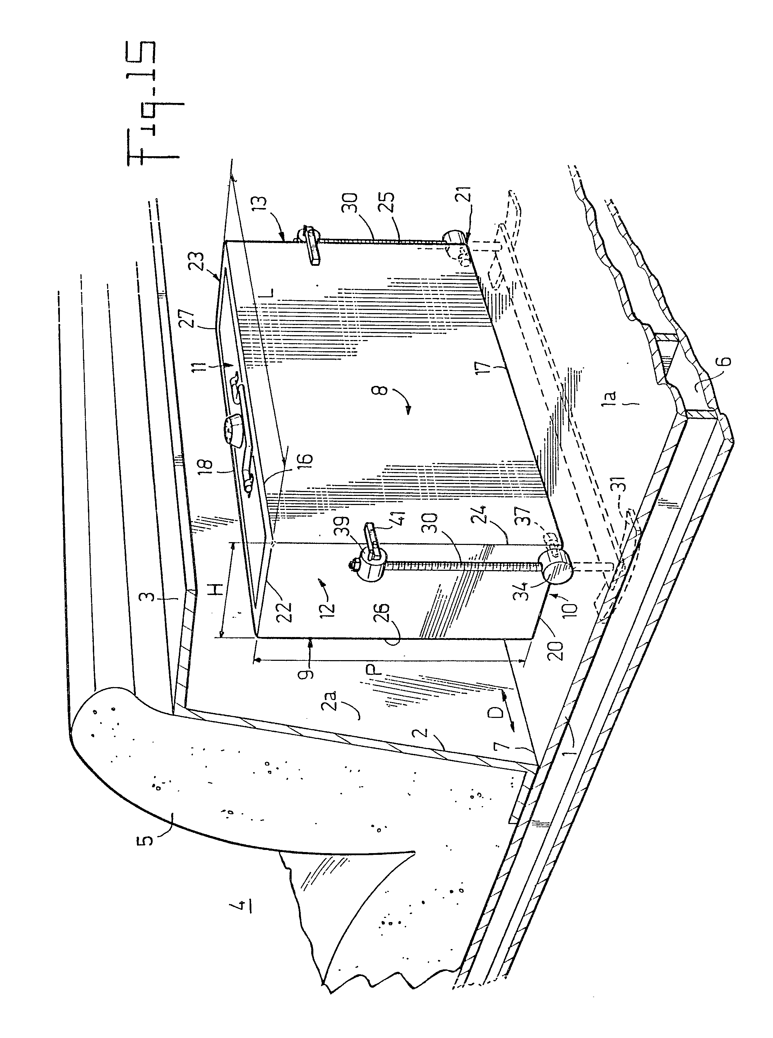

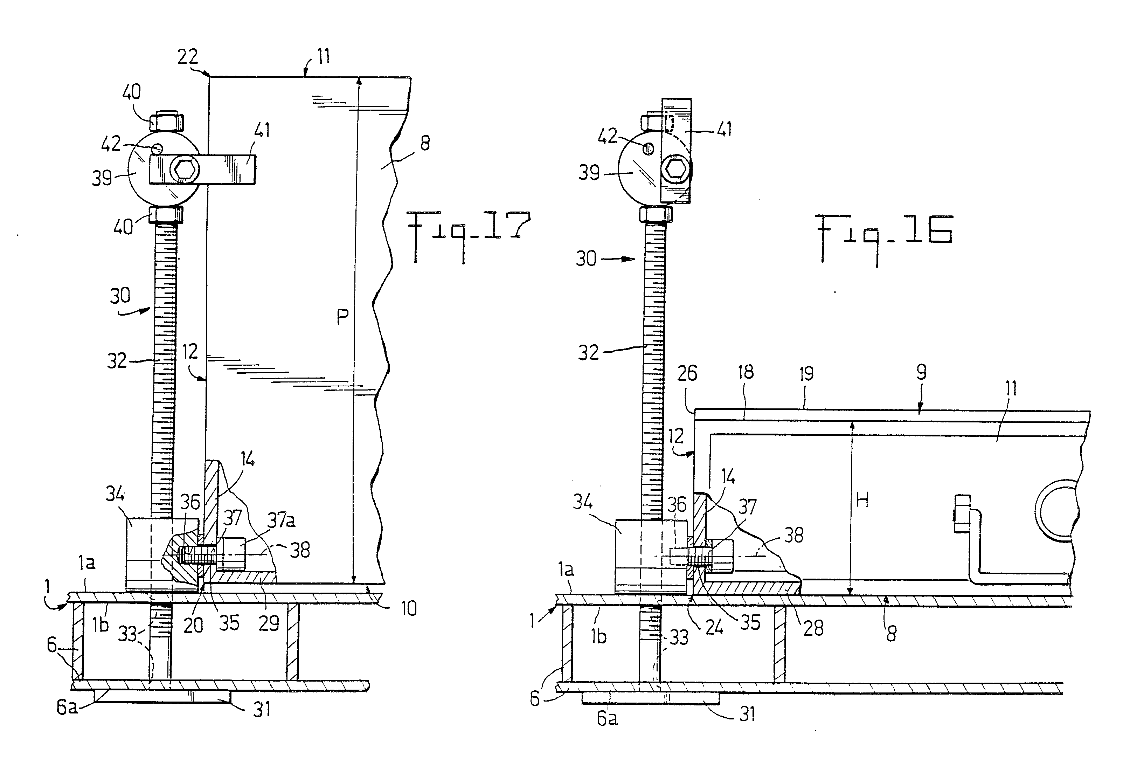

- le figure 16 est une vue du coffre-fort de la figure 15, avec coupe partielle, dans une première position de ce coffre-fort ;

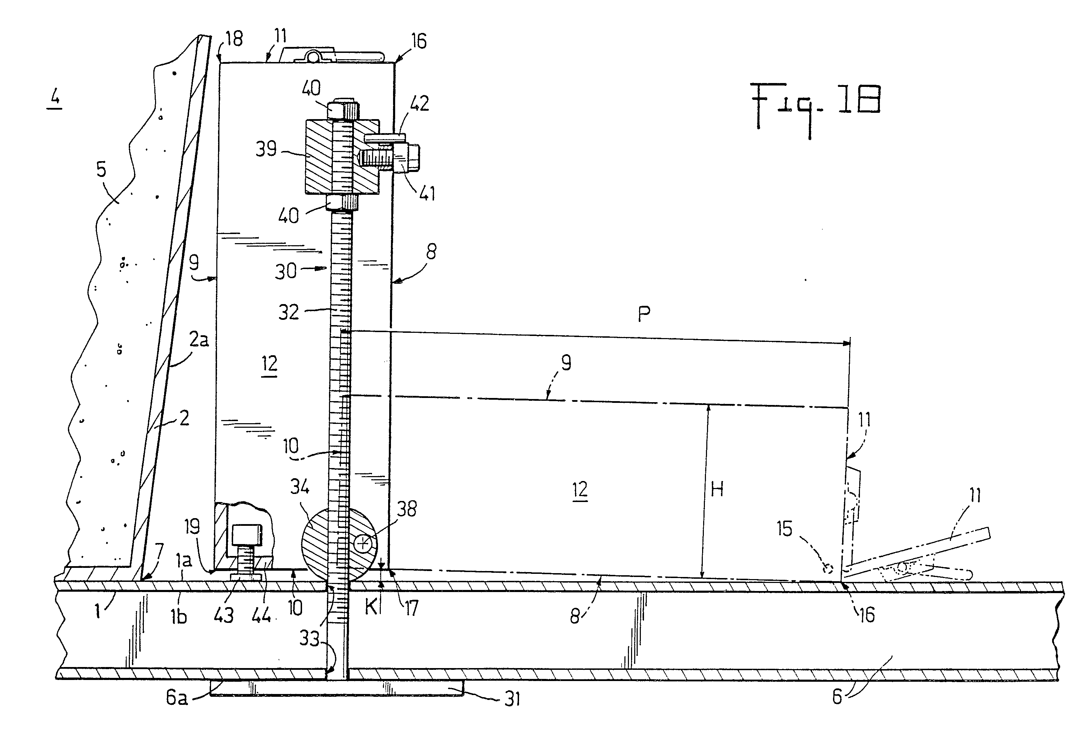

- la figure 17 est une vue analogue à celle de la figure 16, du même coffre-fort, mais dans une deuxième position de ce coffre-fort ; et,

- la figure 18 est une vue de côté, avec coupe partielle, montrant le coffre-fort des figures 16 et 17 dans ses deux positions.

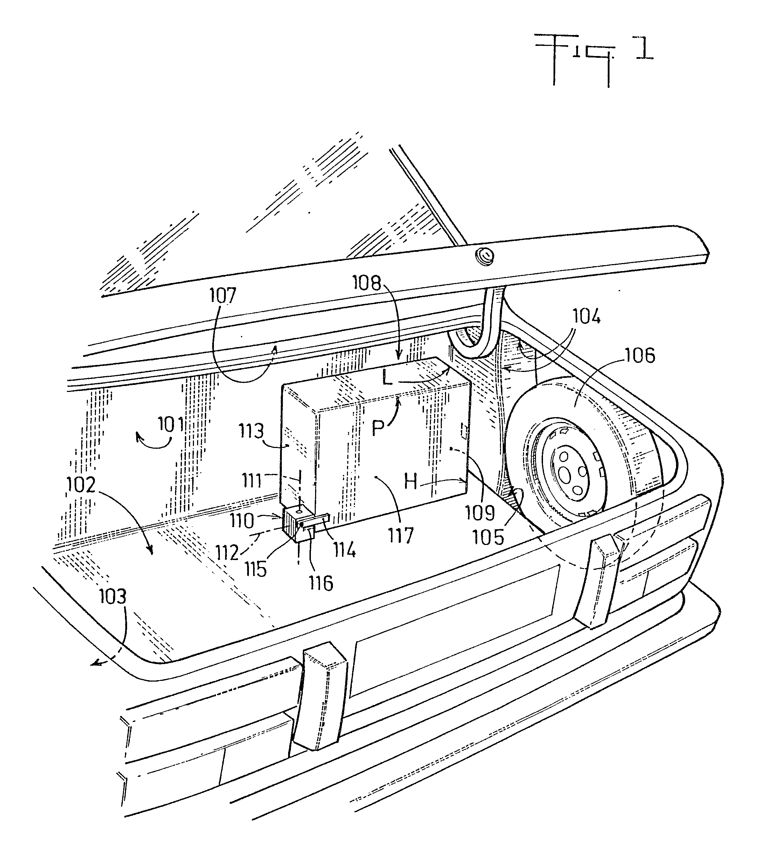

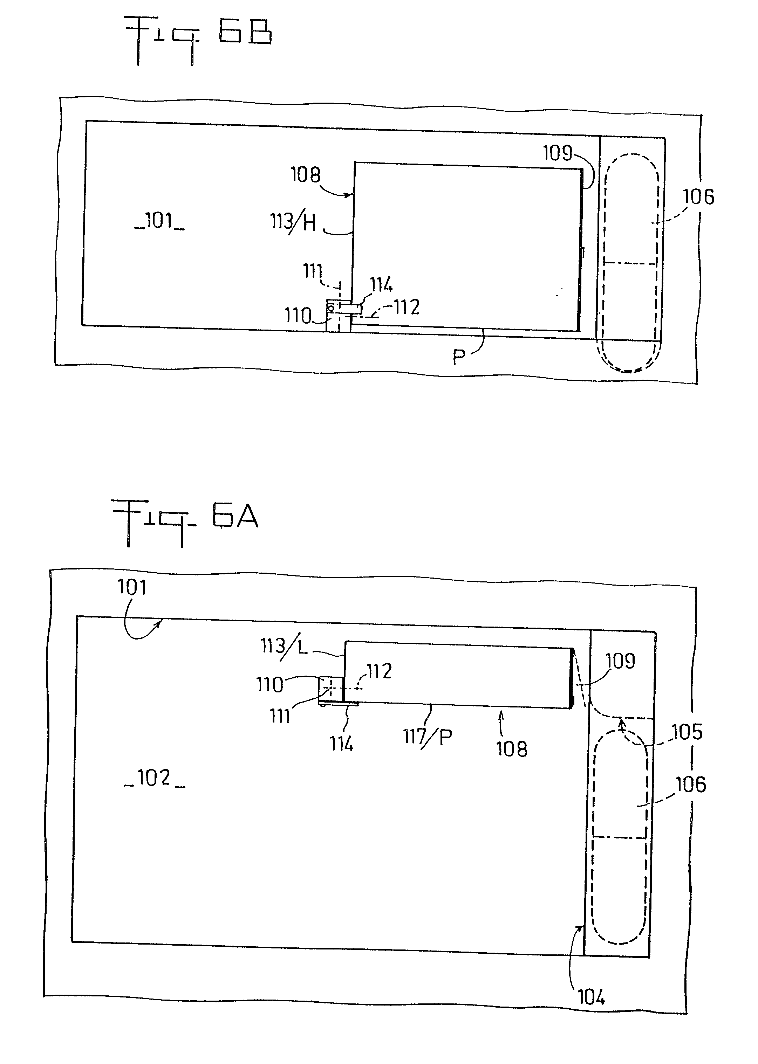

La figure 1 représente schématiquement l'intérieur du compartiment à bagages d'une véhicule de tourisme délimité par le fond arrière 101, sensiblement vertical, le plancher 102, sensiblement horizontal, une paroi latérale verticale gauche 103, une ouverture latérale verticale droite 104, donnant accès au logement 105 d'une roue de secours 106, et, une paroi supérieure horizontale 107. A l'intérieur de ce compartiment à bagages, un coffre-fort 108, de forme parallélépipédique, susceptible de contenir, par exemple, un serviette en cuir ou analogue ou une petite valise, porte-documents, est disposé. Il s'agit d'un coffre-fort dont l'installation sera décrite ci-après en regard des figures 5A, 5B 6A, 6B, 7A et 7B, dont les trois dimensions sont la profondeur P, perpendiculaire à la porte d'accés 109 du coffre-fort, dans la configuration d'obturation du coffre-fort, de la largeur L et de la hauteur H, la hauteur H et la profondeur P correspondant aux plus grandes dimensions de la serviette ou de la valise à protéger, et la larguer L correspondant au contraire à la petite dimension de cette serviette ou valise. Cette largeur L est donc ici notablement inférieure (entre le 1/3 et le 1/5) des deux autres dimensions, notamment de la profondeur P.

Un support parallélépipédique 110 est monté pivotant sur la structure du plancher 102 autour d'un axe géométrique vertical 111, et porte un axe de pivotement autour d'un axe géométrique horizontal 112, qui est perpendiculaire à la face 113 du coffre-fort opposée à la porte 109, le coffre-fort étant monté pivotant par rapport au support 110 autour de l'axe géométrique 112. On observe également qu'une languette rectangulaire 114 est montée pivotante sur le support 110 autour d'un axe géométrique 115 orthogonal aux deux autres axes géométriques 111 et 112, cette languette 114 étant maintenue horizontalement en prenant appui sur la face supérieure d'une saillie 116 dont est munie la face avant du support 110, et étant ainsi disposée en regard de l'une (117) des grandes faces du coffre-fort, maintenant celui-ci en position dressée, à proximité du fond 101 du compartiment à bagages, la largeur L étant perpendiculaire à ce fond 101, et la profondeur P et la hauteur H étant parallèles au fond 101.

Le support 110 et son montage présentent les particularités suivantes :

- le support 110 comporte un alésage taraudé 118 d'axe géométrique vertical 111 ;

- une tige filetée 119, susceptible de se visser dans l'alésage taraudé 118, s'érige verticalement à partir de la face supérieure 120 d'une plaque 121 sur laquelle son extrémité inférieure 122 est soudée, ladite plaque 121 étant en outre munie de deux ergots verticaux 123 également soudés sur sa face supérieure 120 ;

- le plancher 102 est constitué par une structure composite de deux tôles horizontales maintenues écartées par des voiles de liaison, comportant un trou traversant 124 et deux trous borgnes inférieurs 125, la tige 119 traversant le trou 124, ainsi qu'une plaque d'appui 126 disposée en appui sur la face supérieure 102a du plancher 102, et les ergots 123 passant dans les trous 125, un écrou 127, vissé sur la tige filetée 119, permettant d'assujettir celle-ci au plancher 102 en mettant en appui la face supérieure 120 de la plaque 121 sur la face inférieure 102b du plancher, et en serrant la plaque d'appui 126 sur la face supérieure 102a du plancher ;

- le support 110 comporte un évidement 128, dont les dimensions permettent la réception de l'écrou 127, lorsque ledit support est presque totalement vissé sur la tige filetée 119 ;

- un jeu J est ménagé entre la face inférieure 110a du support 110 et la face supérieure 126a de la plaque d'appui 126, suffisant pour permettre un vissage complémentaire du support sur la tige filetée d'environ un demi-tour ;

- un trou taraudé horizontal 129, débouchant dans une face verticale 110b du support 110 et d'axe géométrique 112, reçoit le filetage 130 d'une vis dont la tête de vis 131 est disposée à l'intérieur 132 du coffre-fort 108 et n'est d'ailleurs accessible que par l'intérieur du coffre-fort ;

- le filetage 130 traverse à cet effet un trou 133 ménagé dans la face 113 du coffre-fort, l'ensemble réalisant le montage à pivotement dudit coffre-fort par rapport au support 110 autour de l'axe géométrique 112 ;

- dans chacune des deux faces verticales 110c du support 110, perpendiculaires à la face 110b, débouchent deux trous taraudés 134, qui permettent, chacun, de recevoir le filetage 135 d'une vis pour le montage à pivotement de la languette 114 autour de l'axe géométrique horizontal 115, la languette 114 étant retenue par la tête 136 de la vis ;

- sur chaque face 110c est disposée une butée 116 pour que la languette 114 puisse s'étendre horizontalement et être maintenue dans cette position (traits interrompus de la figure 2) ;

- les trous 134 et les butées 116 sont disposés symétriquement par rapport au plan vertical parallèle aux faces 110c et passant par l'axe géométrique 111, respectivement.

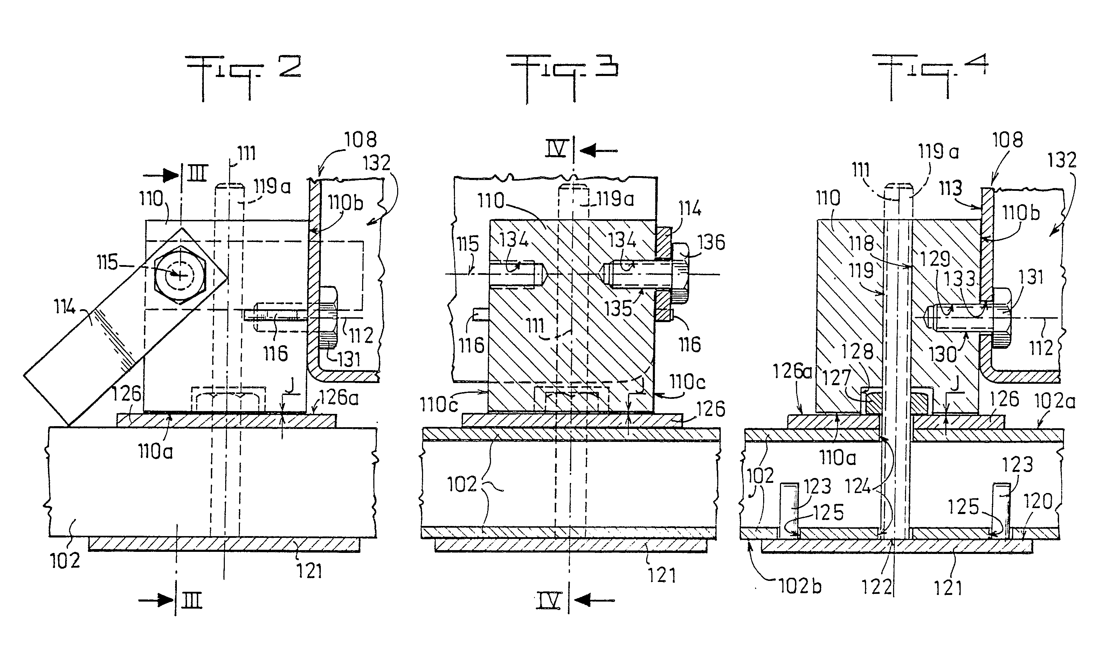

Le dispositif des figures 2, 3 et 4 peut recevoir plusieurs applications.

Une première application est représentée en regard des figures 1, 5A, 5B, 6A, 6B et 7A, 7B.

Selon cette application, la face du coffre-fort est le côté que l'utilisateur a, au moins partiellement, devant lui lorsqu'il désire mettre un objet dans le coffre-fort ou l'en retirer ; c'est le côte qui est muni de la porte 109 du coffre-fort. Le coffre-fort est monté pivotant par rapport au support 110 au moyen de la vis 130-131 qui est introduite à l'intérieur du coffre-fort, et dont la partie filetée 130 traverse le trou 133 ménagé à la partie inférieure avant de la paroi du coffre définie extérieurement par la face 113.

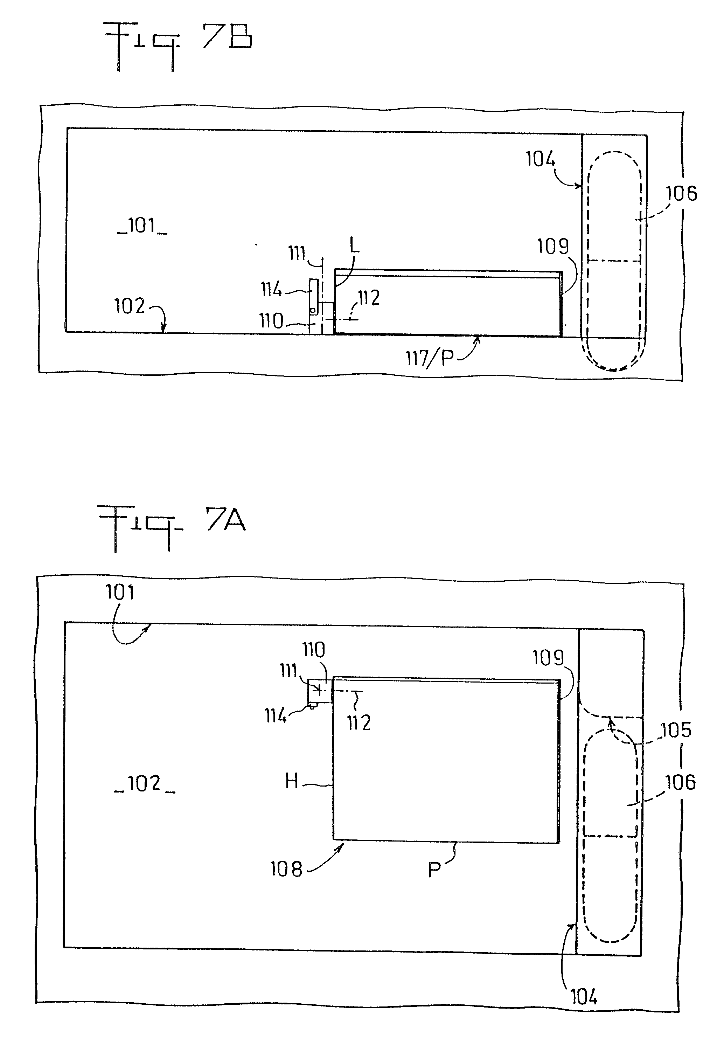

Dans sa position représentée par les figures 1 et 6A, 6B, la porte 109 est parallèle au plan de l'ouverture 104 du logement 105 de la roue de secours 106. Le coffre-fort est rangé le long du fond vertical 101 du compartiment à bagages et son encombrement longitudinal, correspondant à la largeur L, est faible. Par contre, il est difficile, sinon impossible, d'ouvrir la porte 109 et de mettre un objet dans le coffre ou de l'en enlever. La languette 114, sur laquelle bute la face avant 117 du coffre-fort, maintient celui-ci avec cette face avant 117 verticale, empêchant le coffre-fort de pivoter autour de l'axe 112.

Pour pouvoir ouvrir la porte 109 et avoir accès à l'intérieur du coffre-fort, l'utilisateur, en partant de la position des figures 6A, 6B, fait pivoter le support 110 (et, par conséquent, aussi le coffre-fort 108) autour de l'axe vertical 111, jusqu'à la nouvelle position des figures 5A, 5B. Le coffre-fort 108 occupe une place importante dans le sens longitudinal du compartiment à bagages, mais le porte 109 peut être ouverte, et démasque l'ouverture 137 du coffre. Il est aisé, dans cette position, de placer un objet à l'intérieur du coffre-fort ou de l'en retirer. La languette 114, là aussi, évite un basculement non désiré du coffre autour de l'axe horizontal 112.

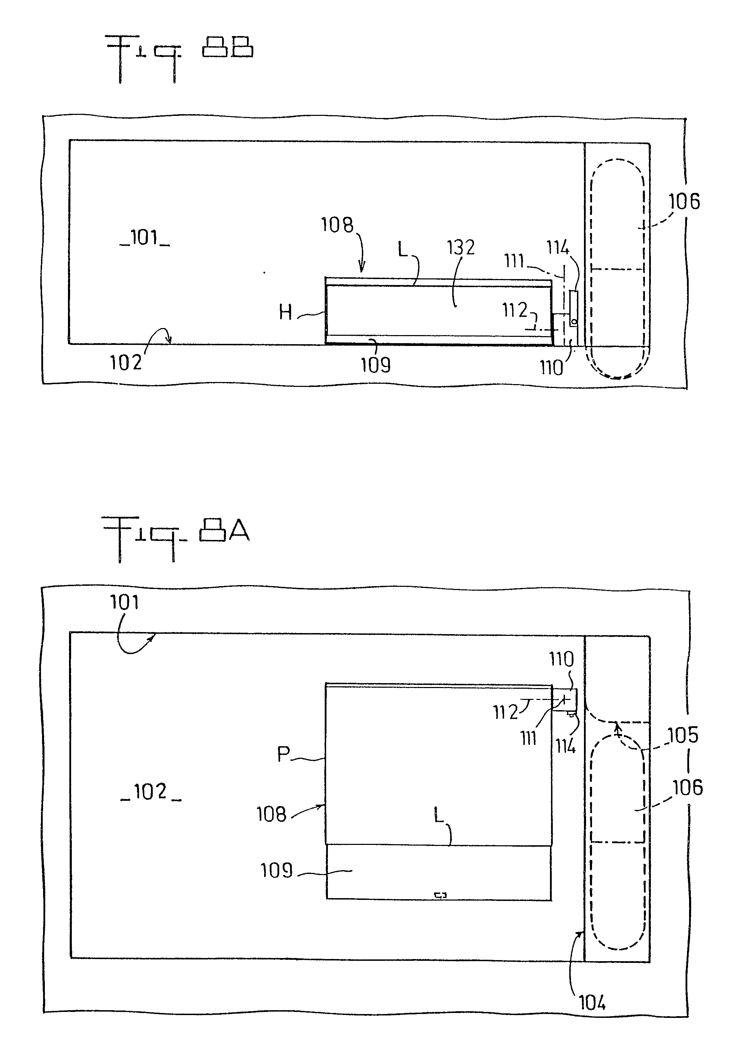

Il se peut enfin que, lorsqu'il n'a pas la nécessité d'avoir accès à l'intérieur du coffre-fort, l'utilisateur souhaite pouvoir utiliser la longueur complète du compartiment à bagages, quitte à n'avoir à sa disposition qu'une hauteur utile moins grande. Il peut alors, en partant de la position des figures 6A, 6B, faire basculer la languette 114 pour libérer le pivotement du coffre-fort 108 autour de l'axe horizontal 112. Ainsi, le coffre-fort est-il placé dans la position des figures 7A, 7B, avec sa largeur qui s'étend verticalement (figure 7B), sur une distance relativement faible, libérant au-dessus du coffre-fort la totalité de la longueur du compartiment à bagages. Les grandes faces du coffre-fort sont alors sensiblement parallèles au plancher 102, et des valises, même longitudinalement encombrantes, peuvent être placées au-dessus du coffre-fort 108.

Dans la position des figures 6A, 6B, pour dégager le compartiment à bagages, la grande dimension (la profondeur P) a été disposée parallèlement au fond 101 du compartiment à bagages, la plus petite dimension (la largeur L) s'étandant perpendiculairement audit fond 101, de sorte que, dans cette direction, l'encombrement du coffre-fort est minimal.

Dans la position des figures 7A, 7B, le même raisonnement a été appliqué, mais vis-à-vis du plancher 102. La profondeur P est donc parallèle au plancher 102, et la largeur L perpendiculaire audit plancher (donc verticale).

Une autre application du dispositif des figures 2, 3 et 4 est représentée sur les figures 8A, 8B, 9A, 10A, 10B et 11A, 11B.

Le coffre-fort est d'abord représenté (figures 8A, 8B) dans la position où un utilisateur a accès à l'intérieur 132, la porte 109 étant ouverte. Ici, la largeur L constitue la plus grande dimension, la hauteur H la plus petite dimension et la profondeur P la dimension intermédiaire. La porte 109 laisse ouverte la face avant verticale d'introduction des objets dans le coffre-fort. La largeur L et la profondeur P sont parallèles au plancher 102 et la hauteur H s'étend verticalement. L'encombrement du plancher 102 du compartiment à bagages est important.

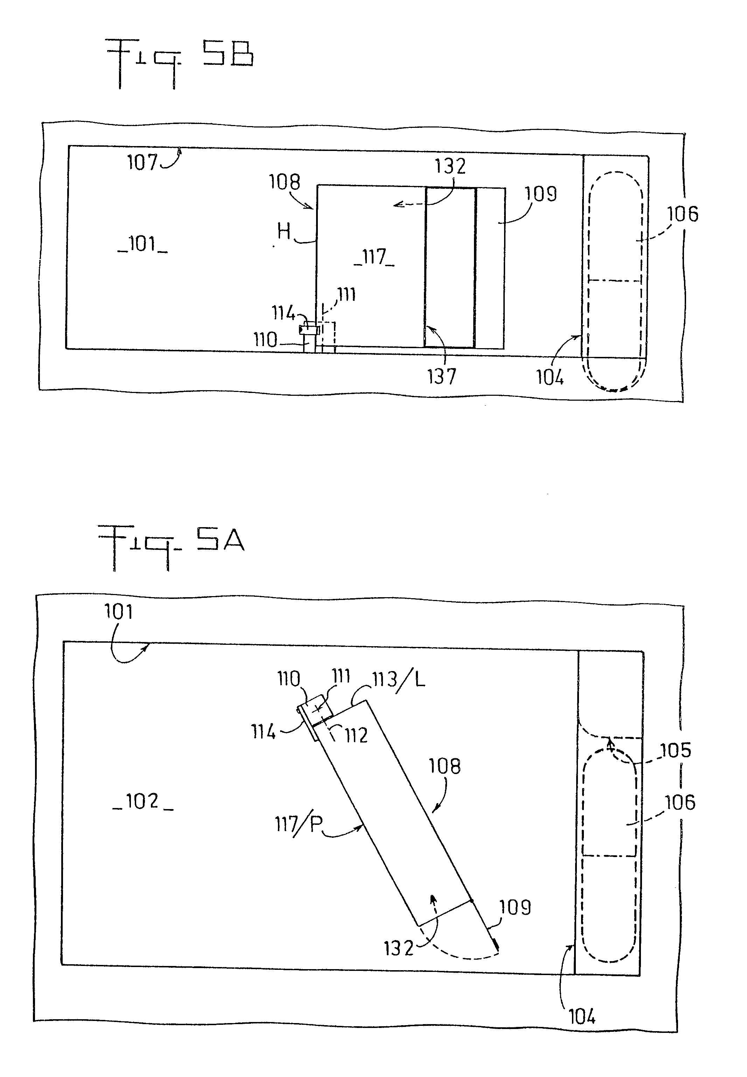

On aura observé que le coffre-fort est monté pivotant, par rapport au support 110, autour de l'axe horizontal 112 au moyen d'une vis non visible, qui est introduite dans le trou taraudé 129, représenté sur la figure 4.

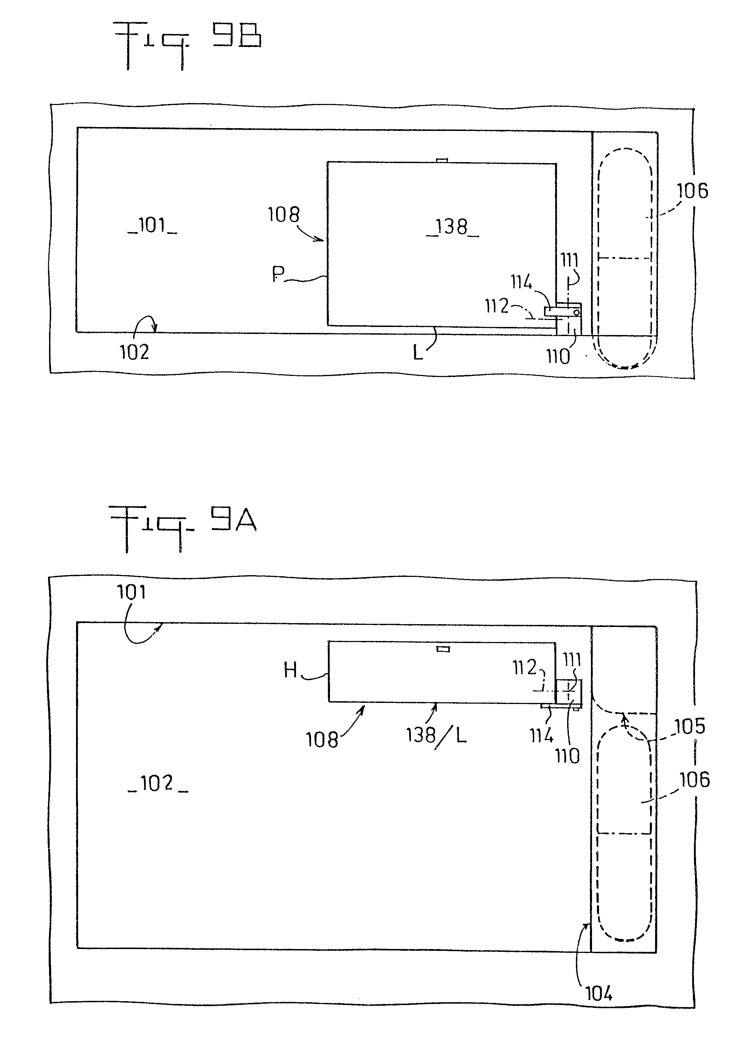

Pour libérer une grande partie du plancher 102, l'utilisateur de la disposition des figures 8A, 8B peut alors, après avoir refermé la porte 109 du coffre-fort 108, redresser verticalement le coffre-fort, en le faisant pivoter autour de l'axe horizontal 112, jusqu'à arriver dans la position des figures 9A, 9B. La profondeur P et la hauteur H sont parallèles au fond 101 du compartiment à bagages et la plus petite dimension, la hauteur H est horizontale, perpendiculaire audit fond 101 : l'encombrement du plancher 102 a été considérablement réduit (figure 9A), et, pour maintenir les grandes faces du coffre-fort, délimitées par la profondeur P et la largeur L, verticales, la languette 114 est mise en place devant, ce qui devient la face avant visible 138 du coffre-fort 108.

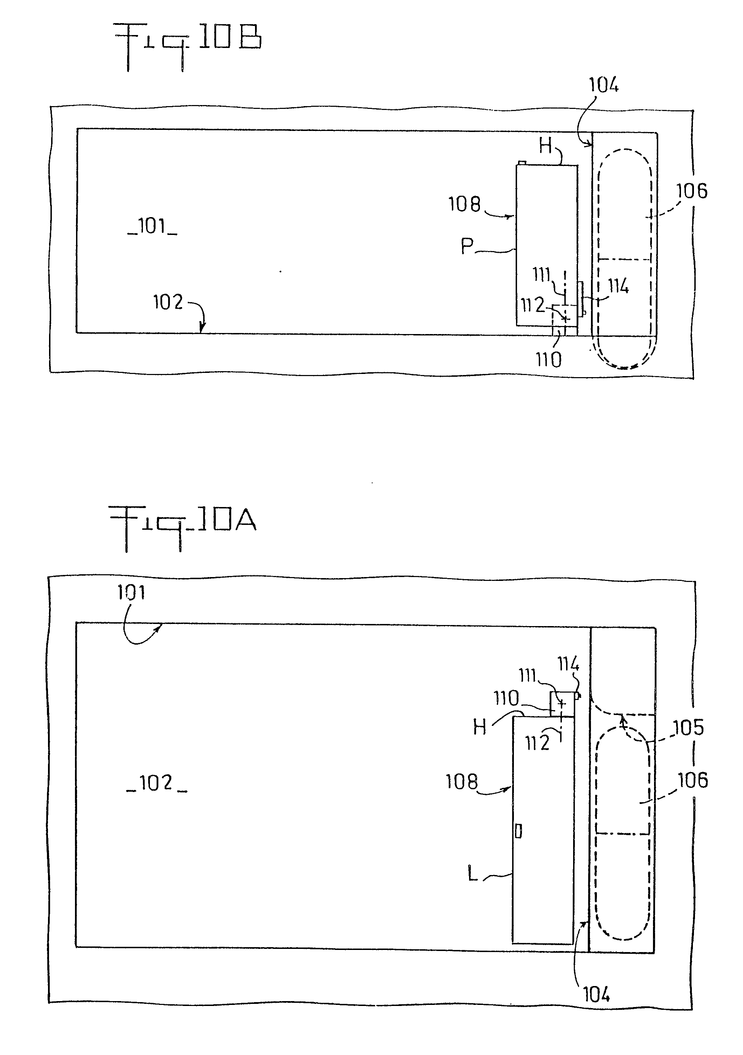

L'utilisateur peut, par ailleurs, désirer ne rien perdre dans le sens longitudinal de la dimension (de la profondeur) du compartiment à bagages, et préférer accepter une légère diminution de la place disponible dans le sens de la largeur du compartiment à bagages. Il lui suffit dans ce cas de placer le coffre-fort le long de l'ouverture 104 du logement de la roue de secours 106 (figures 10A, 10B). Pour ce faire, en partant de la position représentée sur les figures 9A, 9B, il fait pivoter d'environ 90°, autour de l'axe vertical 111, le coffre-fort 108, dont la profondeur P et la largeur L sont parallèles au plan de l'ouverture 104, la largeur L s'étandant horizontalement, la profondeur P s'étendant verticalement. La plus petite dimension, la hauteur H du coffre-fort, s'étend perpendiculairement au plan de l'ouverture 104. Le coffre-fort tient donc peu de place dans le sens de la largeur du compartiment à bagages, et a dégagé en particulier la place qu'il occupait, longitudinalement, dans la position représentée les figures 9A, 9B.

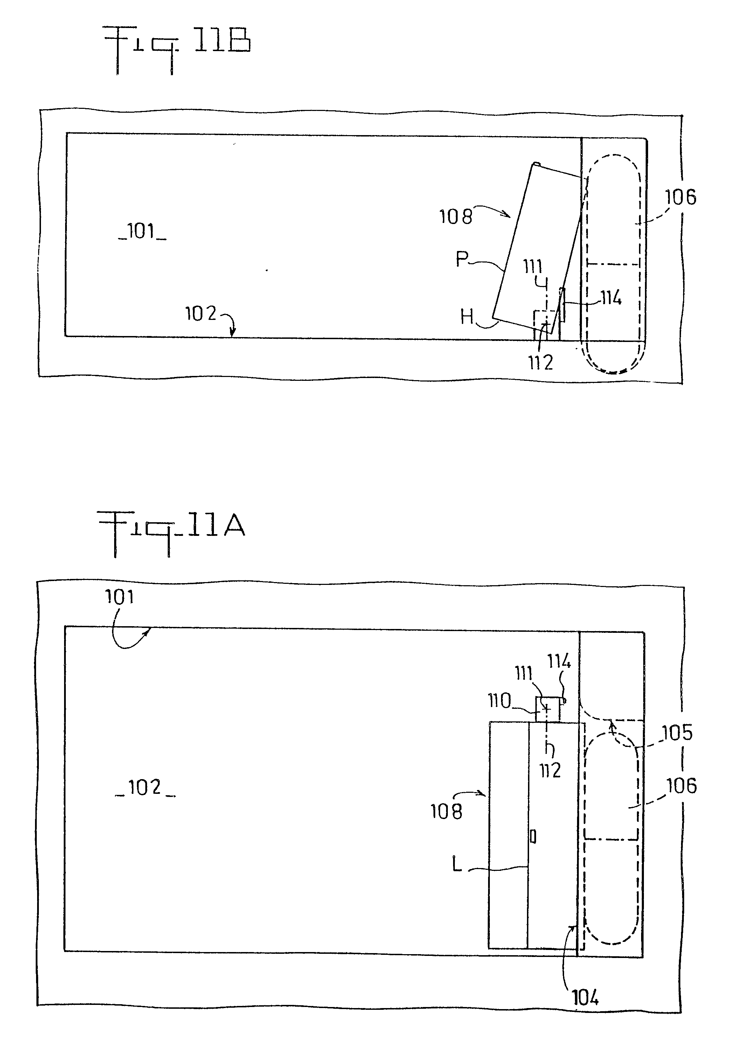

Afin de réduire encore l'encombrement dans le sens de la largeur du compartiment à bagages, le coffre-fort 108 peut, à partir de la position représentée sur les figures 10A, 10B, être légèrement basculé à l'intérieur du logement 105 de la roue de secours 106 dans lequel sa partie supérieure pénètre par l'ouverture 104, jusqu'à venir en appui sur la roue de secours. C'est la position des figures 11A, 11B qui se déduit de celles des figures 10A, 10B par pivotement du coffre-fort 108 autour de l'axe horizontal 112.

Il doit être observé que la fixation du coffre-fort est indémontable par quelqu'un qui n'aurait pas la clef de la porte du coffre-fort et qui n'aurait donc pas accès à l'intérieur du coffre-fort 108. En effet, la plaque intérieure 121 étant plaquée sur la face inférieure 102b, les ergots 123 sont inaccessibles et ne peuvent pas être sciés, ce qui permettrait de dévisser la plaque 121 par rapport au support 110. La tige filetée 119 ne peut pas non plus être sciée au niveau de la plaque 126, le jeu J ne permettant pas le passage d'une lame de scie. L'écrou 127 ne peut pas être dévissé, puisque, après vissage du support 110 sur la tige filetée 119, cet écrou 127 est dissimulé à l'intérieur de l'évidement 128. Enfin, le coffre-fort 108 ne peut être détaché du support 110 que par celui qui peut enlever la vis 130-131, c'est-à-dire par le propriétaire du coffre-fort, qui en possède la clef, a ainsi accès à l'intérieur 132 du coffre-fort et peut atteindre la tête de vis 131.

De manière préférée, la tige filetée 119 a initialement une hauteur supérieure à la somme des pièces assemblées, de sorte qu'un excédent 119a de cette tige filetée dépasse de la face supérieure du support 110. Il suffit, au moment du montage, du couper la tige filetée pour en supprimer cet excédent 119a. Ainsi, avec un seul modèle de tige filetée 119, le montage peut être assuré sur tous les véhicules, quelle que soit l'épaisseur de leur plancher 102.

Le moyen de rendre solidaire la tige 119 du plancher 102, qui a été décrit en regard des figures 2, 3 et 4, suppose la possibilité pour l'utilisateur de percer de part en part le plancher 102, en ayant notamment accès à sa face inférieure 102b. Cette possibilité n'existe pas toujours, tout au moins avec facilité, notamment en raison de l'emplacement du réservoir de carburant en dessous du plancher, dans la zone, où il serait nécessaire de mettre en place la plaque 121.

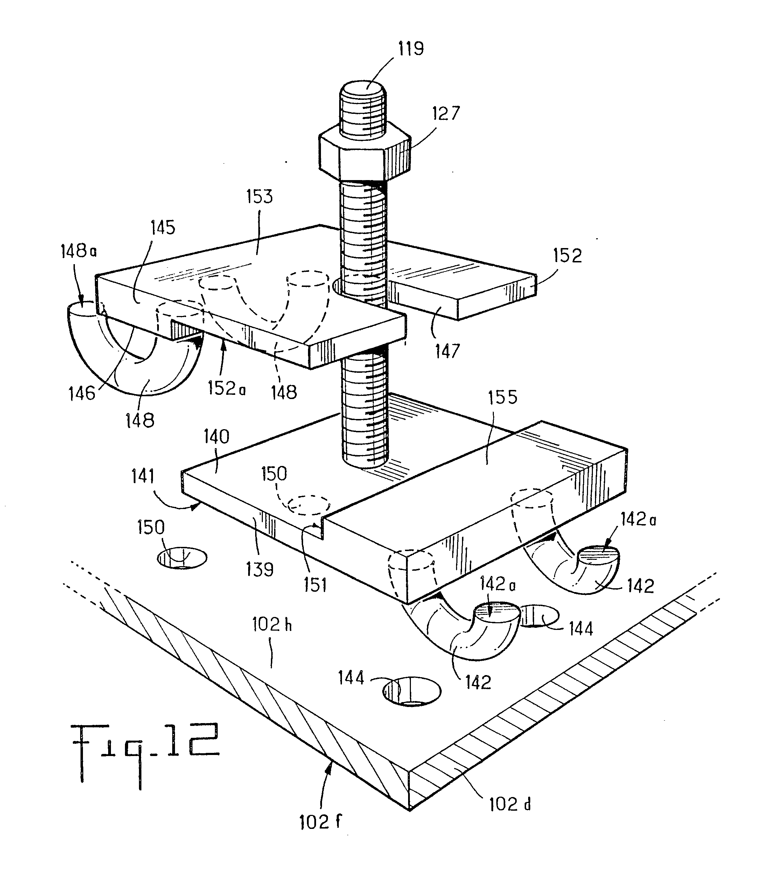

Dans ce dernier cas, l'utilisateur peut recourir à un montage différent du précédent, mais réalisant la même fonction, à savoir la solidarisation de la tige 119 avec le plancher 102 : cet autre montage est représenté en regard des figures 12, 13 et 14.

Le plancher 102 comprend dux têles espacées l'une de l'autre, une tôle intérieure 102e une tôle supérieure 102d, elle-même délimitée par une première face inférieure 102f et une deuxième face supérieure 102h.

Une première plaque 139 comportek elle-même une première face supérieure 140 et une deuxième face inférieure 141 et et munie de deux premiers crochets 142 qui en sont solidaires, fixés sur la deuxième face 141, et sont recourbés vers le plan 143 de cette deuxième face 141, en en étant écartés. La tige 119 s'érige sensiblement perpendiculairement à partir de la première face 140. La tôle supérieure 102d du plancher est traversée par deux premiers trous 144, qui sont disposés de manière à permettre le passage des extrémités libres 142a des crochets 142.

Une deuxième plaque 145 comporte une face inférieure 146 et une échancrure 147 de passage de la tige 119. Deux deuxièmes crochets 148 sont solidaires de la deuxième plaque 145, sont fixés sur sa face inférieure 146 et sont recourbés vers le plan 149 de cette face inférieure 146, en en étant écartés. La tôle supérieure 102d du plancher est traversée par deux deuxièmes trous 150, qui sont disposés de manière à permettre le passage de extrémités libres 148a des crochets 148. A noter que la première plaque 139 présente une surépaisseur 151 qui correspond à l'épaisseur d'une partie amincie 152 de la deuxième plaque.

La présentation des pièces est représentée sur la figure 12.

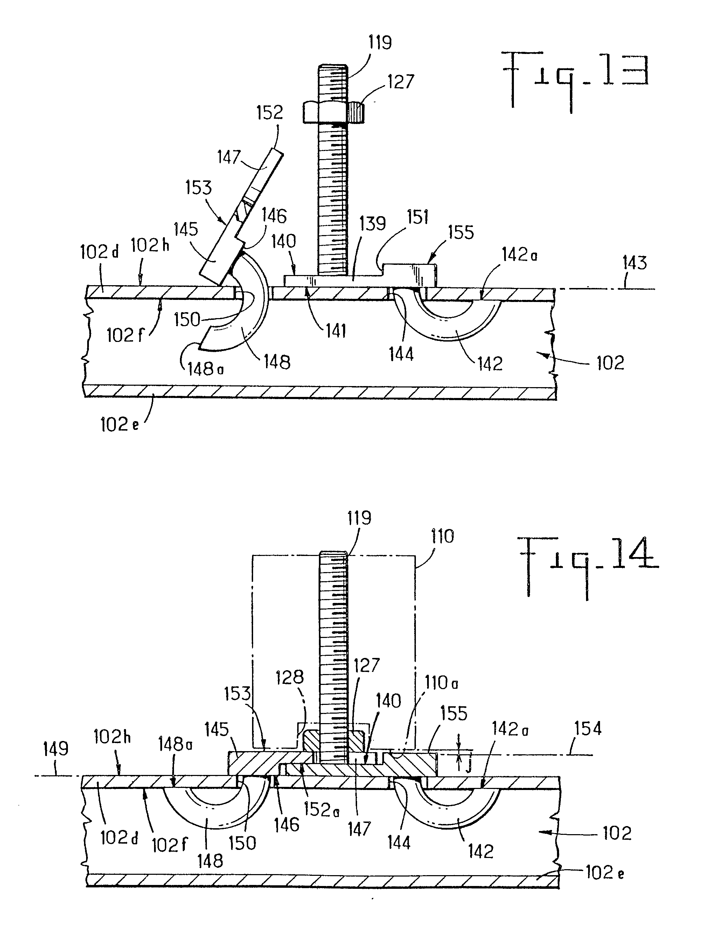

A partir de la configuration de cette figure 12, les extrémités 142a des premiers crochets 142 sont introduites dans les trous 144 jusqu'à ce que la deuxième face 141 de la première plaque repose sur la deuxième face 102h de la tôle 102d et qu'alors, les extrémités 142a des crochets 142 soient au contact de la première face 102f de la tôle 102d (figure 13). Puis, les extrémités 148a des crochets 148 sont à leur tour introduites dans les deuxièmes trous 150, jusqu'à ce que la face inférieure 146 de la deuxième plaque 145 repose sur la deuxième face 102h de la tôle 102d, et qu'alors, les extrémités 148a des crochets 148 soient au contact de la première face 102f de la tôle 102d (figure 14).

Dans cette configuration de la figure 14, la tige 119 a eu la possibilité de pénétrer dans l'échancrure 147 ; la face inférieure 152a de la partie amincie 152 de la deuxième plaque 145 repose sur la première face 140 de la première plaque 139 ; enfin, l'écrou 127 est complètement vissé et appuie sur la face supérieure 153 de la deuxième plaque 145 et assemble ainsi les première (139) et deuxième (145) plaques, les premiers crochets 142 et les deuxièmes crochets 148 interdisant la séparation de l'ensemble de ces deux plaques d'avec la tôle 102d. Ainsi, la tige 119 est fixée sur le plancher 102, et permet ensuite le montage du support 110 déjà décrit en regard des figures 2 à 4. Tout ce qui a été défini précédemment concernant ce support 110 est repris ici, la face inférieure 110a du support étant disposée en regard du plan commun 154 de la face supérieure 153 de la deuxième plaque 145 et de la face supérieure 155 de la surépaisseur 151, en en étant écartée de la valeur du jeu J.

Une autre variante de réalisation est représentée en regard des figures 15 à 18, qui représentent donc un coffre-fort conforme à l'invention, installé dans le compartiment à bagages d'une voiture de tourisme. Ce coffre-fort a des dimensions qui permettent, par exemple, d'y abriter une mallette de voyage contenant des documents de grande valeur.

Le véhicule est donc partiellement représenté et on y distingue : la face supérieure 1a de l'assise horizontale 1 du compartiment à bagages, constitué par une tôle d'acier ; la face 2a de la paroi verticale (sensiblement verticale) 2, délimitant le fond avant du compartiment à bagages, et prolongée à sa partie supérieure par une étagère horizontale 3. La paroi 2 et la planche 3 délimitent l'habitacle 4 : le dossier 5 de la banquette arrière du véhicule est adossé à la paroi 2. Un radisseur 6, formant longeron, est fixé sur la face inférieure 1b de la tôle 1. La paroi 2 intersecte l'assise 1 selon une arête 7, parallèle à la direction D de la largeur du véhicule.

Le compartiment à bagages contient un coffre-fort constitué par les six faces extérieures suivantes, deux à deux parallèles, définies par rapport à une première position de ce coffre-fort, représentée en traits interrompus sur la figure 18 : la face inférieure 8, sensiblement horizontale ; la face supérieure 9, parallèle et opposée à la face 8 ; la face arrière 10, sensiblement verticale et sensiblement parallèle à la paroi 2 de l'habitacle ; la face avant 11, parallèle et opposée à la face 10 et constituant la porte du coffre-fort, montée pivotante autour d'un axe géométrique horizontal 15, situé à la partie basse de la face 11 ; la face verticale 12, qui délimite la paroi latérale gauche 14 ; et la face verticale opposée 13, qui délimite la paroi latérale droite du coffre-fort. Ces diverses faces s'intersectent par les arêtes suivantes : les faces 8 et 11, 8 et 10, 9 et 11, et 9 et 10 ont en commun, respectivement, les arêtes 16, 17, 18 et 19, qui définissent la largeur L du coffre-fort et qui sont parallèles à l'arête 7 du compartiment à bagages ; les faces 10 et 12, 10 et 13, 11 et 12, et 11 et 13 ont en commun, respectivement, les arêtes 20, 21, 22 et 23, qui définissent la hauteur H du coffre-fort ; enfin, les faces 8 et 12, 8 et 13, 9 et 12, et, 9 et 13 ont en commun, respectivement, les arêtes 24, 25, 26 et 27, qui définissent la profondeur P du coffre-fort. La face 8 délimite la paroi 28, alors que la face 10 délimite la paroi 29 de coffre-fort.

Deux tiges 30 sont érigées verticalement le long des faces verticales latérales 12 et 13 du coffre-fort, de part et d'autre de ce coffre-fort, sont munies à leurs extrémités inférieures de plaques d'appui 31, en acier, qui y sont soudées, ont leurs parties supérieures munies d'un filetage 32 et traversent des trous 33 ménagés dans les raidisseurs 6 et dans l'assise 1, en étant introduites par le dessous du compartiment à bagages jusqu'à ce que les plaques d'appui 31 viennent en appui sur la face inférieure 6a des raidisseurs 6. Des écrous 34, réalisés dans des rondelles cylindriques épaisses, coopèrant avec les filetages 32 des tiges 30 et fixent définitivement ces tiges sur l'assise 1, en étant orientés de manière que les faces planes des rondelles les constituant soient parallèles aux faces verticales latérales 12 et 13 du coffre-fort, ces rondelles étant écartées juste suffisamment pour permettre l'introduction du coffre-fort entre elles, lesdites faces verticales 12 et 14 étant disposées en regard et adjacentes desdites rondelles. La paroi 14 du coffre-fort, et la paroi parallèle opposée, sont percées à leurs parties arrières et inférieures (lorsque le coffre-fort est posé à plat sur l'assise, tel que représenté en traits discontinus sur la figure 18) d'un trou 35. Dans l'épaisseur de chaque écrou 34, un trou taraudé 36 est ménagé, en regard duquel un trou 35 peut être disposé. Deux vis (une seule visible) 37 sont introduites dans le coffre-fort, alors que la porte 11 est ouverte, traversent chacune un trou 35 et sont vissées chacune dans un trou taraudé 36 jusqu'à ce que, d'une part, chaque vis 37 soit vissée complètement dans le trou taraudé 36, et qu'alors, d'autre part, le coffre-fort pivote librement autour de l'axe géométrique commun 38 des vis 37, les têtes 37a des vis 37 formant butées de déplacement pour les faces intérieures de deux parois verticales latérales du coffre-fort. A noter que l'axe 38 est orthogonal à l'axe de chaque tige 30, mais ne coupe pas cet axe de chaque tige 30.

A la partie supérieure des filetages 32 des tiges 30, des supports 39 sont vissés et sont immobilisés par des écrous et contre-écrous 40. Chaque support 39 porte un loquet basculant 41, qui a son basculement limité par un ergot 42, le loquet étant alors horizontal et susceptible, comme représenté sur les figures 15 et 17, de maintenir le coffre-fort verticalement, en formant des butées de la face 8 de ce coffre-fort.

Enfin, des butées réglables 43 sont vissées sur la paroi arrière 44 du coffre-fort (celle qui supporte la face 10) et permettent de maintenir le coffre-fort avec ses faces 8 et 9 verticales, dans la deuxième position que ce coffre peut occuper. Dans cette deuxième position, la face 9 est disposée en regard et à proximité de la face 2a de la paroi 2 et l'encombrement du coffre-fort est réduit, compte tenu du fait que sa hauteur H est notablement inférieure à sa profondeur P, et que, dans cette deuxième position, la hauteur H s'étend horizontalement et la profondeur P s'étend verticalement à l'intérieur du compartiment à bagages. Ainsi, la reste de ce compartiment à bagages est encore important pour le rangement des bagages proprement dits.

Le coffre-fort peut être maintenu dans sa deuxième position grâce aux loquets 41, et peut très facilement être remis dans sa première position (traits interrompus de la figure 18) pour que l'utilisateur ait accès à son volume intérieure de rangement, par basculement d'environ 90° autour de l'axe géométrique 38.

Bien entendu, il fallait concevoir un moyen qui rende le coffre-fort non déplaçable sinon sa fonction de sécurité du rangement des objets ou papiers importants n'était pas réalisée.

Le montage basculant du coffre-fort autour de l'axe 38, qui a été prévu, assure effectivement le non-déplacement du coffre-fort hors du compartiment à bagages, car les écrous 34 et les parties des tiges 30 sur lesquelles ils ont vissés, tout comme les vis 37 elles-mêmes, sont indestructibles rapidement et indémontables, lorsque la porte 11 du coffre-fort est fermée. En effet, le montage des vis 37 est réalisé lorsque cette porte 11 est ouverte, le démontage étant impossible après fermeture de la portel 11, c'est-à-dire pendant que le coffre-fort abrite son précieux chargement.

Il a pu être noté que, lorsque le coffre-fort est placé dans sa deuxième position (figure 18, traits continus), la face 10 ne repose pas sur la face 1a de l'assise 1, car un léger espace K doit être ménagé pour permettre le passage de l'arête 17 lors du basculement du coffre autour de l'axe 38. Ceci est le motif de la présence des butées 43.

Un tel coffre-fort peut également être monté, avec le même dispositif que celui qui a été décrit, à l'intérieur de l'habitacle du véhicule, par exemple près des faces avant des sièges avant, ou encore dans un engin mobile tel qu'une grue ou une pelle hydraulique mobile, ou encore dans une habitation, derrière un fauteuil, par exemple.

Au reste, l'invention n'est pas limitée aux réalisations représentées, mais en couvre au contraire toutes les variantes qui pourraient leur être apportées sans sortir de leur cadre, ni de leur esprit.

**Revendications**

1. Ensemble d'un coffre-fort de forme extérieure généralement parallélépipédique définie par une largeur (L), une hauteur (H) et une profondeur (P), l'une des dimensions - hauteur (H) et largeur (L) - étant notablement inférieure à la profondeur (P), cet ensemble étant monté sur une structure de fixation, caractérisé en ce que le coffre-fort (108) est monté sur la structure (102) au moyen d'au moins un premier axe de pivotement (111) orienté en permanence selon une direction sensiblement parallèle à une face (113) du coffre-fort délimitée par lesdits hauteur (H) et largeur (L) et sensiblement orthogonal à celle (L) de ces deux dimensions qui est notablement inférieure à la profondeur (P), ledit premier axe de pivotement (111) étant en outre inaccessible dupuis l'environnement extérieur du coffre-fort (108), de manière que, par rapport à ladite structure, ce coffre-fort soit susceptible d'occuper une première position (figures 5A, 5B) dans laquelle la profondeur (P) étant non parallèle à un premier plan de référence (101) (étant perpendiculaire ou oblique par rapport audit premier plan de référence), la gêne provoquée par l'encombrement du coffre-fort est importante, et, une deuxième position (figures 6A, 6B), qui se déduit de ladite première position par pivotement du coffre-fort (108) autour du premier axe de pivotement (111) et dans laquelle la profondeur (P) s'étend parallèlement audit premier plan de référence (101), la gêne provoquée par l'encombrement du coffre-fort étant alors considérablement réduit par rapport à celle précitée correspondant à la première position du coffre-fort.

2. Ensemble d'un coffre-fort selon la revendication 1, caractérisé en ce qu'un deuxième axe de pivotement (112) sensiblement orthogonal audit premier axe de pivotement (111) et inaccessible depuis l'environnement extérieur du coffre-fort réalise le montage à pivotement du coffre-fort par rapport à un support (110) qui, lui, est monté pivotant par rapport à la structure (102) autour dudit premier axe de pivotement (111), de manière que, par rapport à ladite structure (102), le coffre-fort soit susceptible d'occuper une troisième position (figures 7A, 7B) qui se déduit de la deuxième position (figures 6A, 6B) au moins par un pivotement du coffre-fort (108) autour du deuxième axe de pivotement (112) et dans laquelle, d'une part, la profondeur (P) s'étend parallèlement à un deuxième plan de référence (102), d'autre part, la gêne provoquée par l'encombrement du coffre-fort (108) est considérablement réduite par rapport à celle correspondant à ladite première position (figures 5A, 5B) du coffre-fort (108).

3. Ensemble d'un coffre-fort selon la revendiction 1, caractérisé en ce que le premier axe de pivotement (112, figures 8A, 8B) est monté sur un support (110), qui est lui-même monté pivotant par rapport à la structure (102) autour d'un deuxième axe de pivotement (111) sensiblement orthogonal audit premier axe de pivotement (112) et inaccessible dupuis l'environnement extérieur du coffre-fort, de manière que, par rapport à ladite structure, le coffre-fort soit susceptible d'occuper une troisième position (figures 10A, 10B) qui se déduit de la deuxième position (figures 9A, 9B) au moins par un pivotement du coffre-fort (108) autour du deuxième axe de pivotement (111) et dans laquelle, d'une part, la profondeur (P) s'étend parallèlement à un deuxième plan de référence (104), d'autre part, la gêne provoquée par l'encombrement du coffre-fort (108) est considérablement réduite par rapport à celle correspondant à ladite première position (figures 8A, 8B) du coffre-fort (108).

4. Ensemble d'un coffre-fort selon l'une quelconque des revendications 1 à 3, caractérisé en ce qu'il comprend un dispositif (114) de maintien sélectif du coffre-fort dans sa deuxième position (figures 6A, 6B ; figures 9A, 9B).

5. Ensemble d'un coffre-fort selon l'une quelconque des revendications 1 à 4, caractérisé en ce qu'il comporte une tige (119) présentant deux extrémités, une première (122) desdites extrémités étant rendue solidaire (121-123-127) de la structure (102) et la deuxième extrémité (119) étant filetée, cependant que ledit support (110) comporte, d'une part un alésage taraudé (118) qui coopère avec ladit deuxième extrémité filetée (119) de la tige pour le montage à pivotement dudit support, d'autre part un trou taraudé (129) d'axe (112) orthogonal à celui (111) dudit alésage (118), une vis, comportant une tête de vis (131) et une partie filetée (130), ayant sa partie filetée traversant un trou (133) dont est munie l'une des parois du coffre-fort (108), la tête de vis (131) étant disposée à l'intérieur (312) du coffre-fort (108) et la partie filetée (130) de la vis coopérant avec le trou taraudé (129) pour le montage à pivotement du coffre-fort (108) par rapport au support (110).

6. Ensemble d'un coffre-fort selon la revendication 5, caractérisé en ce que la première extrémité (122) de la tige (119) est solidaire d'une plaque (121) munie d'au moins un ergot d'arrêtoir (123), cependant que la structure (102) comporte un trou traversant (124) susceptible d'être traversé par ladite tige (119) et au moins un logement (125) susceptible de recevoir ledit ergot d'arrêtoir (123), la tige (119) traversant le trou (124), l'ergot (123) étant reçu dans le logement (125), et un écrou (127) coopérant avec le filetage (119) de la deuxième extrémité de la tige à la fixation de ladite tige sur la structure (102) jusqu'à application de ladite plaque (121) sur une face (102b délimitant la structure (102).

7. Ensemble d'un coffre-fort selon la revendication 5, caractérisé en ce que la première extrémité de la tige (119) est solidaire d'une première face (140) d'une première plaque (139), en ce qu'au moins deux premiers crochets recourbés (142) sont solidaires de ladite première plaque (139) en étant fixés sur une deuxième face (141) de cette première plaque opposée à ladite première face (140) et comportent, chacun, une extrémité libre (142a) orientée vers, et écartée du plan (143) de la deuxième face (141) de la première plaque,
en ce que la structure (102) comporte une première face (142f) orientée en sens opposé à celui d'érection de la tige filetée (119) par rapport à ladite structure, une deuxième face (142h) opposée à ladite première face (142f) de la structure, et des premiers trous (144) de passage desdits premiers crochets (142),
en ce qu'une deuxième plaque (145) comporte, d'une part, au moins un deuxième crochet (148) recourbé qui en est solidaire et qui est fixé sur une face (146) de cette deuxième plaque (145), chaque deuxième crochet (148) comportant une extrémité libre (148a) orientée vers, et écartée du plan (149) de ladite face (146) de la deuxième plaque (145), d'autre part, une échancrure (147) de passage de ladite tige (119),
en ce que la structure comporte en outre au moins un deuxième trou (105) de passage du ou des deuxième(s) crochet(s), (148), et, en ce que le montage desdites première (139) et deuxième (145) plaques sur la structure est tel que les premiers crochets (142) traversent les premiers trous (144) jusqu'à ce que, d'une part, la deuxième face (141) de la première plaque (139) soit en appui sur la deuxième face (102h) de la structure, d'autre part, les extrémités libres (142a) des premiers crochets (142) soient situées à proximité ou au contact de la première face (142f) de la structure ; le ou les deuxième(s) crochet(s) (148) traversent les deuxièmes trous (150) correspondants jusqu'à ce que, d'une part, la face (152a) de la deuxième plaque (145) soit en appui sur la première face (140) de la première plaque (139), d'autre part, l'extrémité libre (148a) de chaque deuxième crochet (148) soit située à proximité ou au contact de la première face (102f) de la structure ; ladite tige (119) a traversé l'échancrure (147) de la deuxième plaque (145) ; et, un écrou (127), coopérant avec l'extrémité filetée de la tige (119), maintient les première (139) et deuxième (145) plaques en appui mutuel et assemblées, interdisant de ce fait la sortie des premiers (142) et deuxièmes (148) crochets hors de leurs trous respectifs (144, 150).

8. Ensemble d'un coffre-fort selon l'une quelconque des revendications 6 et 7, caractérisé en ce que le support (110) comporte un évidement (128) dans lequel l'écrou (127) est susceptible d'être contenu.

9. Ensemble d'un coffre-fort selon l'une quelconque des revendications 5 à 8, caractérisé en ce qu'une languette (114) est montée pivotante sur le support (110), cependant qu'une butée (116) de limitation de son débattement est solidaire dudit support (110), l'ensemble constituant un dispositif de maintien sélectif du coffre-fort (108) dans sa deuxième position.

10. Ensemble d'un coffre-fort selon la revendication 1, ou selon le groupe des revendications 1 et 4, caractérisé en ce que la structure comporte une paroi délimitée par une face supérieure et par une face inférieure accessible à un monteur de coffre-fort, le dispositif de montage du coffre-fort étant constitué par :
- deux tiges (30), qui traversent ladite paroi (1), en étant placées de part et d'autre du coffre-fort et s'étendant sensiblement perpendiculairement à la paroi, chacune de ces tiges ayant une première extrémité constituant le support d'une plaque d'appui (31) et ayant la deuxième extrémité minie d'un filetage (32),
- deux écrous (34), qui coopérant avec lesdits filetages de manière à mettre en appui lesdites plaques d'appui (31) sur une face de la paroi (1) et ainsi à fixer lesdites tiges à la paroi, et
- deux vis (37), qui coopérant chacune avec un trou taraudé (36) ménagé dans chaque écrou (34), sensiblement orthogonalement par rapport à l'axe de la tige (30) correspondante, qui traversent chacune un trou (35) ménagé dans deux parois opposées (14) du coffre-fort et dont les têtes (37a) (de vis) sont contenues à l'intérieur du coffre-fort et ne sont accessibles que par l'intérieur de ce coffre-fort.

11. Ensemble selon la revendication 10, caractérisé en ce que l'une au moins des tiges a son extrémité supérieure qui s'étend vers le haut au-delà de l'écrou (34) correspondant, cependant que le dispositif (41) de maintien sélectif du coffre-fort dans sa deuxième position est fixé sur l'extrémité supérieure de ladite tige et est constitué par au moins un loquet (41), qui est monté basculant sur un support (39) vissé et immobilisé (40) surt l'extrémité supérieure de ladite tige (30) et sur lequel la face (8) du coffre-fort, par laquelle celui-ci repose sur l'assise (1) lorsqu'il est placé dans sa première position, est susceptible d'être en butée afin de limiter le pivotement du coffre-fort lorsque celui-ci est alors placé dans sa deuxième position.

Fig 1

Fig. 2

Fig. 3

Fig. 4

EP 0 318 364 A1

**Fig. 5B**

**Fig. 5A**

EP 0 318 364 A1

Fig 6B

Fig 6A

## Fig 7B

## Fig 7A

## Fig 8B

## Fig 8A

# Fig. 9B

_101_

108

P

102

_138_

114

112

111

110

L

106

# Fig. 9A

101

H

108

112

111

138/L

114

110

105

_102_

106

104

Fig. 10B

Fig. 10A

## Fig. 11B

## Fig. 11A

Fig.12

EP 0 318 364 A1

Fig.13

Fig.14

Fig.15

EP 0 318 364 A1

Fig. 18

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | GB-A-2 105 399  (WOODWARD) <br> * Page de garde, résumé * <br> --- | 1 | E 05 G    1/00 <br> B 60 R    5/00 <br> B 60 P    3/03 |
| A | DE-A-3 420 880  (HANER) <br> * Page 8, lignes 17-35; page 9, lignes 1-34; page 10, lignes 1-7; figure 4 * <br> --- | 1 | |
| D,A | US-A-4 457 240  (HUNGERFORD) <br> ----- | | |

DOMAINES TECHNIQUES RECHERCHES (Int. Cl.4)

E 05 G
B 60 R
B 60 P

Le présent rapport a été établi pour toutes les revendications

| Lieu de la recherche | Date d'achèvement de la recherche | Examinateur |
|---|---|---|
| LA HAYE | 27-02-1989 | NEYS B.G. |

EPO FORM 1503 03.82 (P0402)